# EUROPEAN PATENT APPLICATION

(11) **EP 4 765 485 A1**
(43) Date of publication of application: **24.06.2026**
(21) Application number: 24222977.1
(22) Date of filing: 23.12.2024
(51) Int. Cl.: H01Q 1/32, H01Q 21/00, H01P 5/107

(54) **RADAR SENSOR WITH A WIDE FIELD OF VIEW**

(71) Applicant: Novelic Doo Beograd - Zvezdara, 11000 Belgrade (RS)
(72) Inventor: JOVICIC, Milos, 11000 Belgrade (RS); VRELJAKOVIC, Rados, 11000 Belgrade (RS); SIMIC, Nenad, 11000 Belgrade (RS); BRANKOVIC, Veselin, 11000 Belgrade (RS); MIHAJLOVIC, Veljko, 11000 Belgrade (RS); SOLOPERTO, Raffaele, 82140 Olching (DE); TASOVAC, Darko, 11000 Belgrade (RS)
(74) Representative: Dennemeyer & Associates S.A.

(57) **Abstract**

A mmWave radar sensor module is proposed, to have a specific structure enabling a 180° Field of View (FoV) with an affordable system cost. The proposed mmWave radar sensor module is put to use in passenger vehicles, commercial vehicles, automated guided vehicles (AGVs), as well as motorcycles and bikes, enabling a variety of application features: smart parking assistance, replacing PDC sensors, determining the distance, speed and angle of targets, including their tracking, detection of people, tracking of people, tailgate and door protection by restricting opening, gesture and kick sensing, and other applications. In the case of two-wheelers and three-wheelers, the same apparatus may cover also blind sport detection application in the affordable system manner.

## Description

### TECHNICAL FIELD

The present disclosure refers to an apparatus working as mm-Wave radar sensor module.

### STATE-OF-THE-ART

In the following patents state of the art antennas, used for mm-wave radar sensors with radiation elements are outlined, for various vehicle related applications. Those solutions are not addressing realization solutions of the radars sensor in affordable way, specifically addressing 180° field of view in azimuth, which is an important application requirement.

US20210384613A1 Conformal Antenna Module With 3D-Printed Radome, introduces disclosure, providing several embodiments of integrated conformal antennas that are designed to be integrated into handheld devices and support operation at millimeter-wave operating frequency band that includes 28 GHz. This solution is related to communication applications.

US11145962B2 Conformal antennas formed at a surface of a vehicle, describes the structure and method of forming the conformal antenna involve a slot formed in a portion of the surface of the vehicle.

US11791542B2 RF devices including conformal antennas and methods for manufacturing thereof, is introducing device includes a conformal RF antenna configured to be mounted on a non-metallic component of a vehicle and configured to operate at frequencies greater than 10 GHz.

US11329398B2 Conformal antenna, is introducing conformal phased array of antenna elements with electron steering.

US11005185B2 Millimeter wave conformal slot antenna, is introducing system and method for a conformal millimeter wave (mmW) cavity backed slot antenna.

US20190280365A1 Vehicle integrated antenna with enhanced beam steering, is introducing antennas embedded in or on glass structures.

CN107526063B Radar apparatus and method of processing radar signals, is introducing radar apparatus and a method of processing signals using the same, and more particularly, to an apparatus and a method of receiving and processing received signals having different polarization characteristics using one array antenna.

**WO** US US9520637B2 Agile diverse polarization multi-frequency band antenna feed, is introducing A compact, agile polarization diversity, multiple frequency band antenna with integrated electronics for terrestrial terminal use in satellite communications

**CN** CN116487902A Dual-polarized open waveguide array antenna capable of realizing wide-angle deflection

**WO US JP** US10283832B1 Cavity backed slot antenna with in-cavity resonators, introducing A compact wideband RF antenna for incorporating into a planar substrate, such as a PCB, having at least one cavity with a radiating slot, and at least one transmission line resonator disposed within a cavity and coupled thereto.

CA2363519A1**,** Horizontal polarized slot antennas with omni-directional and sectoral radiation pattern, introduces antenna with a slot on the surface of a dielectric substrate, with mictrostrip feeding line on the bottom of the substrate.

US11404796B2**,** Omni-directional orthogonally-polarized antenna system for MIMO applications is introduces an antenna system can have two arrays of horizontally polarized radiating elements, and two arrays of vertically polarized radiating elements, having microstrip line feeding.

US10992057B2**,** Electronic device having dual-band antennas mounted against a dielectric layer

JP5606238B2**,** Dielectric waveguide slot antenna introduces a device may be provided with a cover layer and a phased antenna array mounted against the cover layer, where feeding is done from different layers.

### SUMMARY

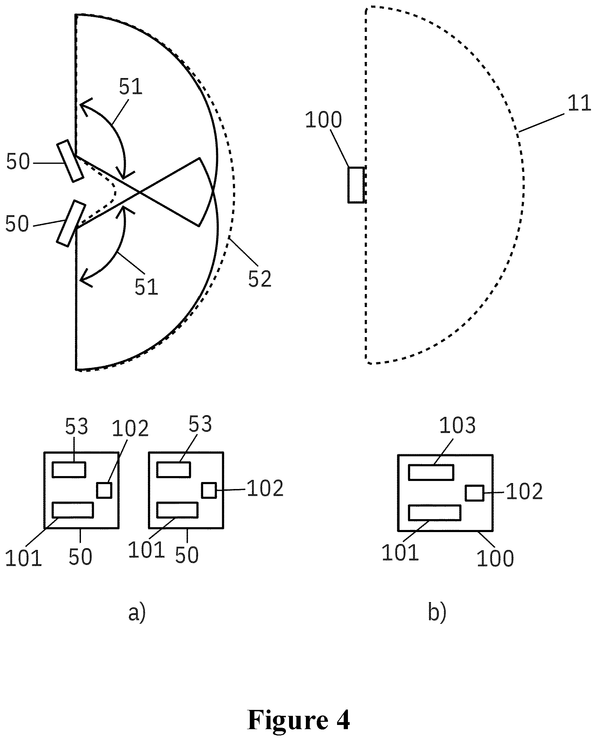

The basic motivation for the invention is to provide a new generation of very wide field of view (FoV), 180° degree coverage, radar vehicle sensors, which may be produced in an affordable way, by maintaining sufficiently good performance for matching vehicle sensing requirements. Due to the nature of contactless sensing with the state-of-the-art usage of planar antennas, the typical field of view (FoV) with for a single integrated circuit is about 120 degrees. Because some applications require a 180° field of view, radar sensor modules are typically equipped with two PCBs arranged in such a way that each of them covers a 120° field of view, thus overlapping and covering 180 degrees with two mmWave radar integrated circuits, as shown in Fig 4a. The proposed innovative solution enables usage of a single chip covering almost 180° filed of view, as shown in Fig. 4b, making the whole system less expensive, with potentially lower power consumption.

The main aspect of innovation is using specific innovative antenna radiation elements, being specifically arranged within innovative antenna strings, wherein each of the strings is fed by coplanar waveguide structure. Said coplanar waveguide structure is tapered, providing impedance changes. Said coplanar waveguide structure may contain additional matching structures to provide optimal matching of the overall antenna strings, having one or more innovative radiation elements. Said coplanar waveguide feeding structures have guiding transition to the microstrip lines, which are then connected to the ports: transmitters and receivers of an integrated mm-wave radar circuit. Said innovative radiation elements are two coupled slots on dielectric substrate, being metalized on both sides. Said coupled slots are not metalized parts of the dielectric substrate and said coupled slots are bounded by the sets of in-lined vias connecting one and second part of the dielectric structure, which distance is determining the main dielectric filled waveguide transmission mode, related to main frequency operation of the proposed apparatus.

The apparatus working as a mmWave radar sensor module, comprising mmWave integrated radar circuit entity having at least one receiving input and at least one transmitting output is proposed.

Advantageously to have the best performance with a minimum cost, a following arrangement is proposed: 3 RX 2 TX and 4 RX X 3 Tx, to be served by simple integrated radar chips. Alternatively, 4Tx 4Rx and 8Tx 8Rx integrated chips are used, by introducing better angular accuracy on the expense of more silicon area and higher system cost. Radiation structures can be realized with said antenna strings. Alternative for ultra low-cost sensing solution, with very limited scope of sensing 1Tx and 1 Rx arrangements can be introduced, for very simple collision warning, where advantageously radiation elements are integrated in mm-wave chip package.

Proposed apparatus can be used for applications addressing advantageously passenger vehicles to replace PDC, or ultrasound sensors in efficient way, providing single sensor solution per one side of the vehicle, instead of two, three, four, or even six ultrasound sensors, being invisible and offering extra features, with less harnessing and maintains efforts. Proposed apparatus can be used for applications addressing advantageously commercial vehicles for rear awareness, front awareness and lateral awareness combined with object classification and tracking. Proposed apparatus can be used for applications addressing advantageously 2 wheelers for rear, front awareness and blind spot detection. Proposed apparatus can incorporate camera system to have complementary sensor information by one integration step in a vehicle.

### BRIEF DESCRIPTION OF THE DRAWINGS

Fig. 1 shows application scenarios related to passenger vehicles: Proposed Invention compared to state-of-the-art PDC systems.
Fig. 2 shows application scenarios related to commercial vehicles and autonomous guided vehicles (AGVs).
Fig. 3 shows application scenarios related to 2-wheelers.
Fig. 4 shows State-of-the-art 180° FoV realization versus proposed invention.
Fig. 5 shows a proposed apparatus building blocks.
Fig. 6 shows an antenna sub-system building blocks, where an antenna sub-system is a building part of a proposed apparatus.
Fig. 7 shows an antenna string structure, which is a building part of an antenna sub-system.
Fig. 8a shows a front view of an antenna radiation element, which is a building part of an antenna string structure.
Fig. 8b shows a lateral view of an antenna radiation element, which is a building part of an antenna string structure.
Fig. 9 shows a front view of a coplanar waveguide impedance matching structure, which is a building part of an antenna string structure.
Fig. 10 shows a front view of a coplanar waveguide frequency selective impedance matching structure, which is a building part of an antenna string structure.
Fig. 11 shows a mm-wave front end sub-system building blocks, where mm-wave front end sub-systems are a building part of the proposed apparatus.
Fig. 12 shows a signal processing sub-system building blocks.
Fig. 13 shows simulated radiation diagram serving 180 degree field of view, related to the proposed apparatus.
Fig. 14 shows a possible mechanical outlook of the proposed apparatus, with two mechanical arrangements without camera sensors Fig 14a and without camera sensors Fig 14b.

### DETAILED DESCRIPTION OF THE INVENTION

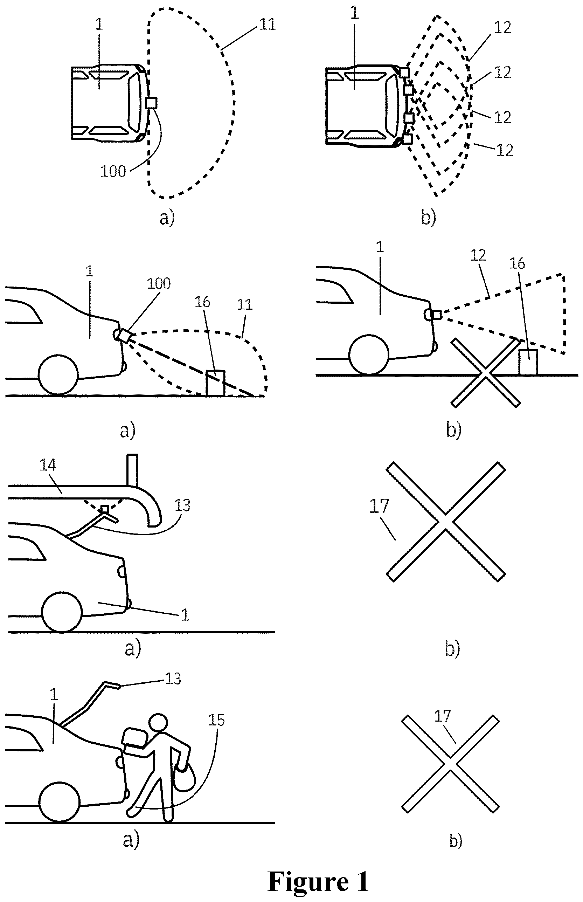

The proposed apparatus 100 can be used as a radar parking sensor, replacing the widely used ultrasonic sensors 12 mounted on passenger vehicles 1 like shown in Fig 1a and Fig 1b. The proposed apparatus 100 has a 180° field of view (FoV), so that one side of the vehicle can be covered by single apparatus. The proposed apparatus 100 regarding applications shown in Fig. 1, can detect objects at distances shorter than 5cm, and larger than 15 meters up to 100 meters, depending on an realization option, and size to be detected object. In addition, proposed apparatus 100 can detect low-height objects, multiple targets as well as their distance, speed and angles, with a field of view of 180 degrees. The same hardware can support integrated kick & gesture sensor functionalities, as well as full software processing in the same hardware module. The state-of-the-art solution needs several (more than two, typically four) proximity distance sensors based on ultrasonic technology to get the same angle of detection. It is obvious that on the side of the vehicle, more than two sensors 12 are needed, due to their small field of view. Moreover, ultrasonic sensors 12 are externally visible, which OEMs do not prefer, due to the optical design disturbance. Sensors 12 cannot reliably detect obstacles below 15cm and cannot reliably detect obstacles above 8m. In the case of damage to the bumper, the replacement of the sensors increases maintenance costs. Ultrasonic sensors 12 can hardly detect low-height objects 16 and cannot include kick and gesture sensor functionality 15, in contrast to proposed apparatus 100. The radiation diagram 11 of the proposed apparatus 100 observes an area with inclination, in contrast to ultrasound sensor 12 having no inclination, no steering capability in elevation and no ability to detect low-height objects 16. Ultrasonic sensors 12 require an additional hardware unit for processing several sensors, and as a system, requires much more harness as proposed apparatus 100. In the case of bumper damage, extra handling of PDC sensors 12 is required, which imposes large maintenance costs. A vehicle tailgate 13 can be damaged by opening hitting garage celling 14. Proposed apparatus 100 can, being installed on tailgate prevent said damages. Due to the specific innovative solutions of the apparatus 100, the total system cost is affordable compared to using PDC sensors on the entire vehicle, considering the better performance and the versatility of new features.

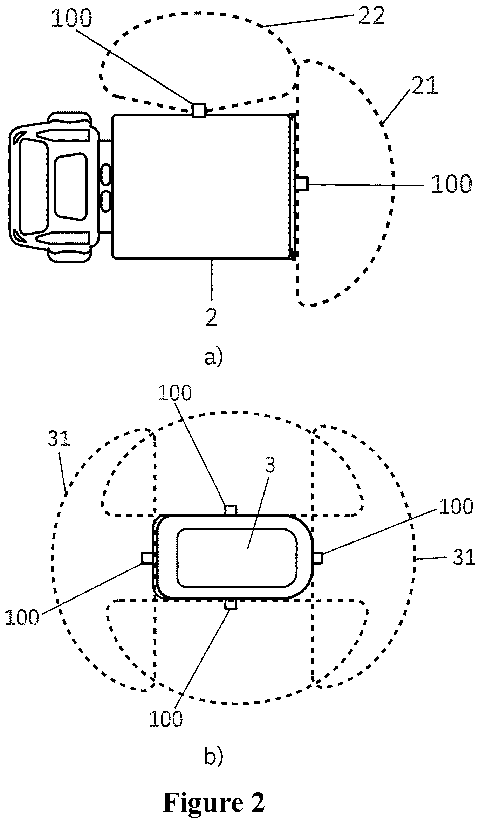

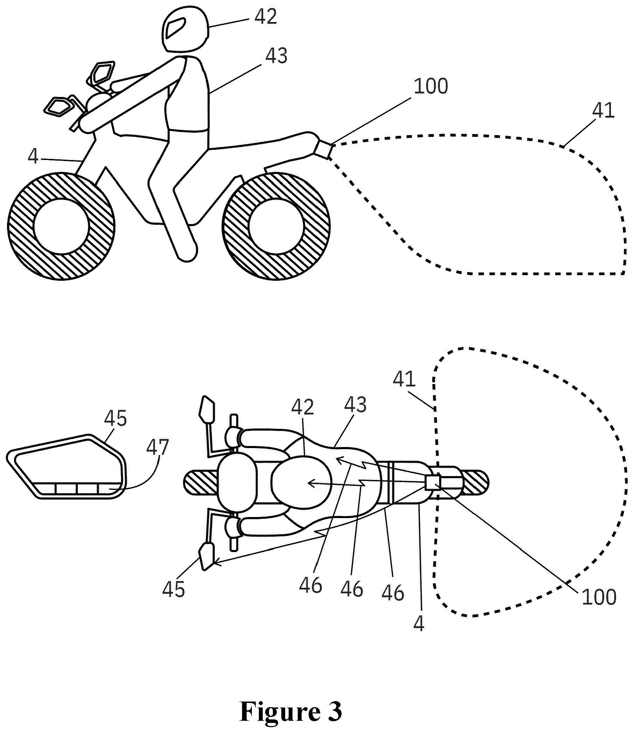

Fig 2a) shows an application scenario where the proposed apparatus 100 is used as a lateral sensor, placed on a truck's 2 side, with the radiation diagram 22, and as a rear sensor placed onto the back of the truck, with a 180° FoV 21. The lateral arrangement allows combined blind spot detection and parallel lane traffic observation features, while the rear arrangement enables perception for detecting obstacles while driving in reverse, detecting the movement and position of people behind the vehicle, as well as optional guided coupling and guiding for tracks 2. Fig 2b) shows an application scenario where the proposed apparatus 100 is used on all sides of an autonomous guided vehicle, AGV 3, having the radiation diagram 31 with a 180° field of view. This arrangement of four units of the proposed apparatus 100 on an AGV 3 enables a 360° view around the vehicle. In corners of the AGV 3, radiation diagram 31 is overlapping with lateral radiation diagrams, providing detection redundancy in those areas, where the detection accuracy in distance values and in angle values is physically lower, thus bringing performance improvements to the system, as the target is measured by two different perpendicular proposed apparatuses 100, so that the AGV 3 system has two measurements from two sources, which can then compensate for inaccuracies of measuring objects in large angles in relation to the particular proposed apparatus 100. The same arrangement is used to provide 360° coverage for passenger vehicles 1, as well as commercial vehicles or trucks 2. Fig. 3a shows the proposed apparatus 100 attached to a two-wheeler vehicle: motorcycle or bike 4 in the rear arrangement. The radiation diagram 41 has a 180° FoV. It may be observed that proposed apparatus 100 has an inclination towards the ground and the main radiation diagram 41 is not symmetrical to the ground surface. This allows for better observation of low-height objects, and it is also advantageous when the proposed apparatus 100 is used for rear and front applications for passenger vehicles 1, for commercial vehicles 2, and for taller AGVs 3. The proposed apparatus 100 has an integrated wireless entity, allowing for wireless communication 46 by arbitrary wireless protocols and frequency means to the rider's helmet 42, the rider's airbag 43 and to the two-wheeler's rear-view mirrors 45. Rear-view mirrors 45 have optical display functionality 47. Arbitrary wireless protocols can be short range communication systems like Bluetooth and WiFi, working in non-licensed frequency bands in the 2.5GHz and 5GHz ranges. The proposed apparatus 100 enables more safety for the rider: enabling acoustic and visual traffic alerts to the helmet, where the rider may hear an alarm or see a warning displayed on the glass portion on helmet 42. The rider's airbag 43 can be proactively inflated before an actual crash happens, due to the apparatus 100 warning it about the crash beforehand, which is state-of-the-art today. On the other side, said apparatus 100 can make use of its 180° observation diagram 41 and its ability to track moving targets to calculate if a vehicle will enter from a blind spot, and communicate the situation by wireless means 46 to the rear mirror 45. The rear-view mirror 45 has display optical functionality 47, which can indicate to the rider the proximity of the vehicle coming from the blind spot. One realization option is that of an entity 47 with several segments lit up with strong colors, preferably red, which are filled with said color depending on the distance, which is easily understandable to the rider. For example, when the vehicle is at the closest distance, all segments are filled in, and fewer are filled the larger the blind spot distance is to the two-wheeler 4.

In all application scenarios described in Fig. 1, Fig. 2 and Fig. 3, the proposed apparatus 100 has its basic operation mode as state-of-the-art mmWave radar sensor, which includes detecting distance and angle to the target, thus determining the position of the target. For each target, we have information about relative speed to the apparatus 100. The proposed apparatus 100 can additionally have a processing sub-system enabling following features, aside from the aforementioned state-of-the-art features: target tracking, target classification, as well as the ability to provide tailgate or door protection for vehicles (as described in Fig. 1), when opening the tailgate or trunk in a low-height garage, or opening the doors, as well as the ability to recognize a kick movement towards the proposed apparatus 100 or a gesture in front of said proposed apparatus 100. Kick sensing is calculated by proposed apparatus as a time-limited, characterized movement with specific dynamic borders, where the distance from the leg to the proposed apparatus 100 is changing in a predefined time frame. Gesture sensing is calculated in a specific time frame, as the specific dynamic of the target is calculated by taking different angular positions and distances to the proposed apparatus 100, where the target is the hand of the user. Door and tailgate protection sensing functions are defined by measuring the distance to the target, in cases where the proposed apparatus 100 is integrated in the vehicle part 1, 2, 3, which move when opened. The proposed apparatus's 100 calculation assures that the critical minimum distance, endangering the tailgate or doors when opened, is not reached, sending an alert to stop the related movement. The proposed apparatus 100 in the case of application scenario in Fig. 3 is calculating and predicting the position of the targets coming from the blind spots of the two-wheeler vehicle 4. The proposed apparatus 100 has processing features that enable classification of the targets, by processing sets of information related to the targets, such as the intensity of the reflected wave, imposed by the Radar Cross Section (RCS) value, the speed of the target, as well as the micro-vibration of the targets. For example, specific RCS value ranges with micro-vibrations may be classified as humans. Additionally, information relating to different targets can be processed by artificial intelligence (AI) algorithms, processing within the proposed apparatus 100. All of the calculation features of said apparatus 100 are executed in the proposed apparatus 100, by apparatus' 100 processing sub-system. The proposed apparatus 100 has almost 180° field of view, which is essential to execute operations in the described application scenarios, described in Fig. 1, Fig. 2. and Fig. 3. The main advantage of the proposed apparatus 100 is observed in Fig. 4. Fig 4 a) shows state-of-the-art sensing topology with almost 180° field of view 52 and Fig. 4 b) shows the field of view achieved by the proposed apparatus 100. The state-of-the-art sensing topology of Fig. 4a is achieved by using one hardware module comprising basically two separate state-of-the-art radar sensing entities 50, each having overlapped 120° FoVs 51, to get the total desired 180° FoV 52. On other side in Fig. 4b, the proposed apparatus 100 can achieve the almost 180° FoV directly. The apparatuses 50 and apparatus 100 both have antenna systems 102 and digital functionalities (101). In Fig. 4 a) the system generally has two RF functionalities 53, two antenna systems 102 for 180° field of view, and two digital functionalities 101. On the other side, said proposed apparatus 100 only requires one set of each. Therefore, the main advantage of the proposed apparatus 100 is fewer electronics and an inherently lower system cost compared to the state-of-the-art of Fig. 4. a). Typically, the state-of-the-art Fig. 4 a) solution has printed antennas on two PCBs.

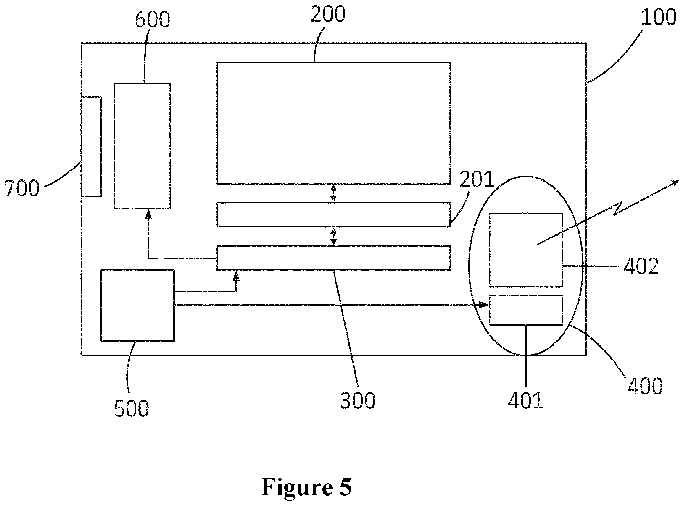

Fig. 5 shows proposed apparatus 100. Said apparatus 100 has an antenna system 200, and an antenna system 200 feeding structure 201. Said feeding structure 201 is connected to an integrated mm-wave radar circuit 300. Said integrated mm-wave radar circuit 300 is sending data to an automotive interface entity 600, which is physically sending data from said apparatus 100 out of said apparatus 100, through a connector entity 700. A power supply entity 500 provides power for said integrated mm-wave radar circuit 300, as for an optional wireless entity 400. Said optional wireless entity 400 has a wireless integrated circuit 401 and a wireless connectivity antenna 402. Said optional wireless entity 400 is advantageously supported wireless two way-short range communication in the frequency bands from 400Mz to 6GHz. Said optional wireless entity 400 is further advantageously using common 2.4 GHz Bluetooth of WiFi standardized communication protocols means as a realization option for communication integrated circuit 401 and a wireless connectivity antenna 402 is printed antenna in 2.4GHz band, allowing the smallest system cost. Said automotive interface entity 600 is enabling digital wired data exchange using state of art automotive and non-automotive communication protocols. Said automotive interface entity 600 advantageously supports CAN communication protocols. Said automotive interface entity 600 advantageously supports automotive Ethernet communication protocols, especially for application scenarios, where preprocessed radar sensor data, are provided to a automotive system for sensor fusion purposes on vehicle dedicated processing unit, like central ADAS processing unit, or by zone controllers. Advantageously, said connector entity 700 has a mechanical part, which is realized in a process of the said apparatus 100 mechanical enclosure manufacturing, to ensure smaller system cost, having at least 4 pins, two for power supply lines and least two for data exchange, with a vehicle system.

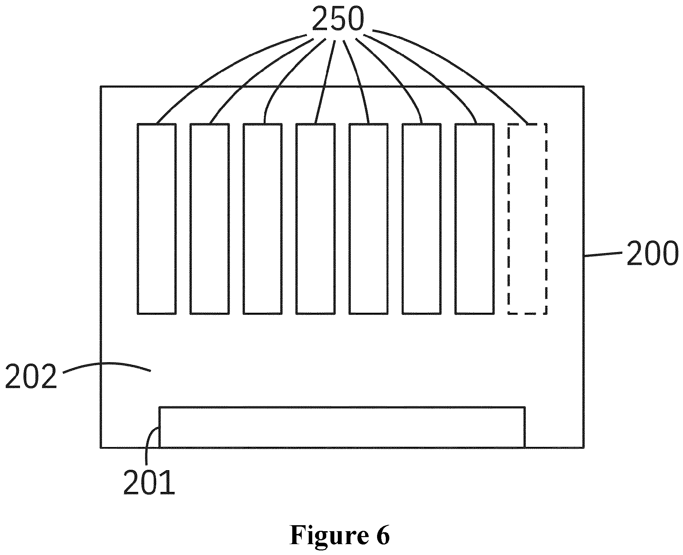

Fig. 6 shows details of said antenna system 200, having sets of antenna strings 250 being embedded in a main substrate 202. Said antenna strings are connected to said feeding structure 201. Said mains substrate is not bended, stiffed dielectric material, which also a base for a main printed circuit board and, where said integrated mm-wave radar circuit 300 is soldered, and where said feeding lines 201 are embedded, using additional embedded high frequency substrate, and where said entity 500, and said entity 600 are embedded on the PCB and where connection to said entity 700 is enabled. Depending on real sensing application needs, and possible restrictions in a said apparatus 100 size, and depending on the target of said apparatus 100 production cost, different number of transmitter and receiver ports of the said integrated mm-wave radar circuit 300 are utilized. Each transmitter and receiver ports of said integrated mm-wave radar circuit 300 is connected over related said feeding structure 201, to one of said antenna strings 250. A smallest number of said antenna strings 250, for meaningful usage if two, with one receiver and one transmitter to detect obstacle or gesture, and three, with two receiver one transmitter, or two transmitter one receiver arrangement to enable detection of the angel to the target, on the top of eth distance. The simplest arrangement with only one receiver antenna and one transmitter antenna, with significantly reduced functionalities can be used for the simplest collision warning applications and for gesture sensing.

Advantageously, two transmitter three receiver arrangement, with 5 said antenna strings 250 is used for simple application like parking sensor, which can be combined with kick sensor application, defined as application set 1. Advantageously, three transmitter four receiver arrangement, with 7 said antenna strings 250 is used for application like parking sensor, which can be combined with kick sensor application, and optionally with low high obstacle detection, defined as application set 2. Advantageously, four transmitter four receiver arrangement, with 8 said antenna strings 250 is used for application like parking sensor, which can be combined with kick sensor application, with low high obstacle detection, and medium range awareness, defined as application set 3. Advantageously, more than 4X4 transmitter, receiver arrangements, with more than 8 said antenna strings 250 is used for application where application set 3 is enhanced by more angular resolution in azimuth and in elevation. More said antenna strings 250 requires more size for said apparatus 100, due to surface of multiplied said antenna strings 250 and related feeding network as well as more complex integrated mm-wave radar circuit 300, with more receivers and transmitters, which imposes also an increase in a production cost of said apparatus 100. Ports of said integrated mm-wave radar circuit 300, mainly transmitter and receiver ports are to be connected mm-wave transmission lines, which are part of said feeding lines 201 structure, and they are supporting advantageously planar connections capability. Said planar connections capability means capability to connected microstrip lines guiding structure, or coplanar waveguide structure. Typically, feeding lines 201 structure is connected by microstrip lines to said integrated mm-wave radar circuit 300 ports on one side, and continues transition to coplanar waveguide structure, like shown in Fig 6, by using, embedded in the printed circuit board, high frequency two-side metalized substrate 251. In said high frequency two-side metalized substrate 251, a transitions from microstrip line to coplanar waveguide are used by introducing vias, to connect ground plane of microstrip lines to upper part of the dialectic material metallization, having specific gaps of one and other side of a main metalized strip, where the electrical field is concentrated, in the same plane where the strip is printed, in contrast to microstrip mode where electric fields are between strip and ground plane of a said high frequency two-side metalized substrate 251. The essential building part of said antenna strings 250 innovative proposal of the innovative apparatus 100 is planar feeding of the structure using coplanar waveguide structures. A transition from microstrip line to said coplanar waveguide planar guiding structure is done in a way that related reflection caused by transmission in the wanted frequency of operation is the smallest possible, or in other words in a way that the characteristic transmission impedances on the guided structures are the same on said coplanar waveguide structure and on microstrip guiding structure. Advantageously input reflection coefficient seeing from said microstrip like structure toward said transition to said coplanar waveguide is better than -10dB. Said antenna system 200 is realized by using thin high frequency two-side metalized substrate 251 having two metallization layers, with a small loses for transmission in mm-waves frequency band, being embedded in more rigidized main substrate 202, where mm-wave frequency band is defined as a frequency band from 24 GHz to 300 GHz.

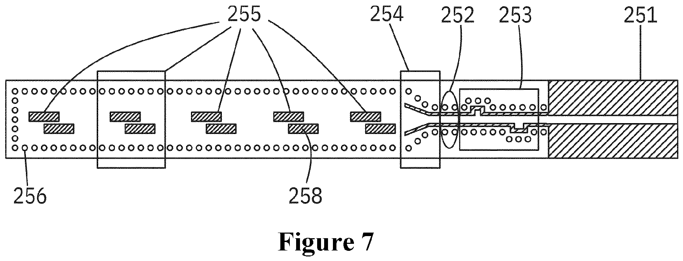

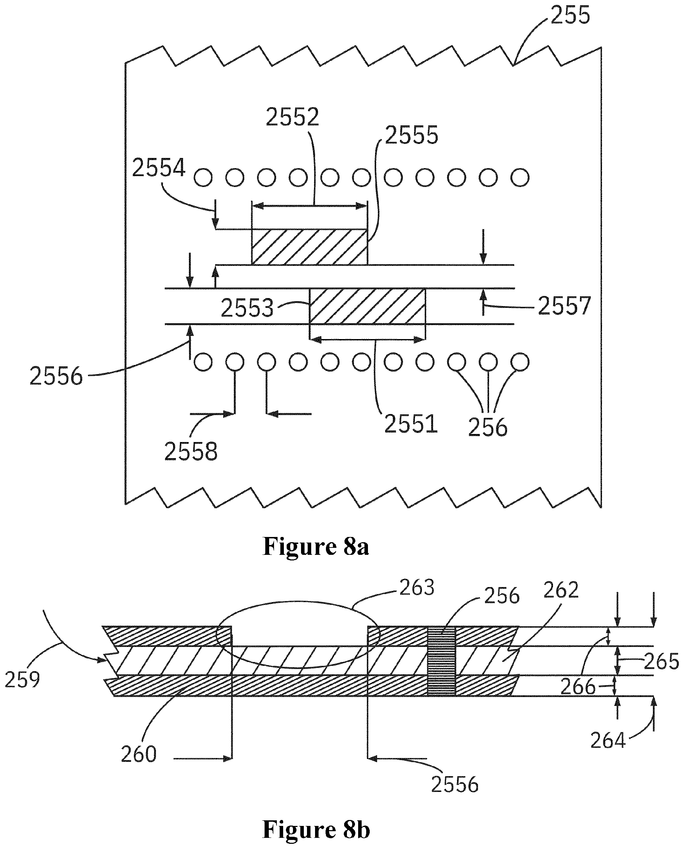

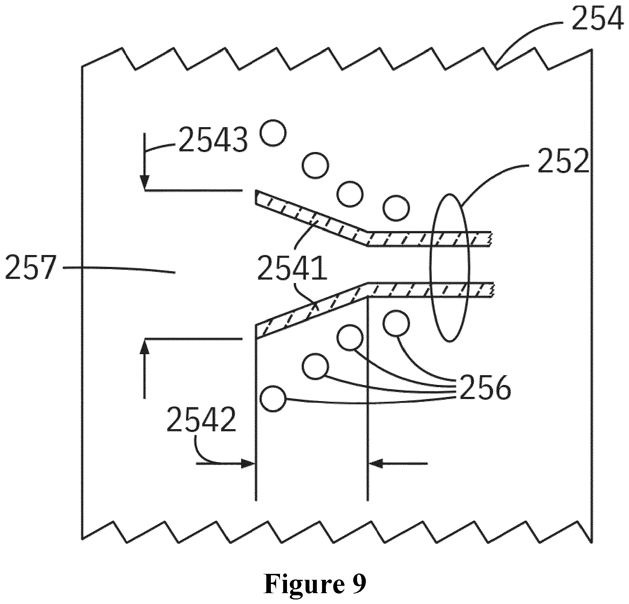

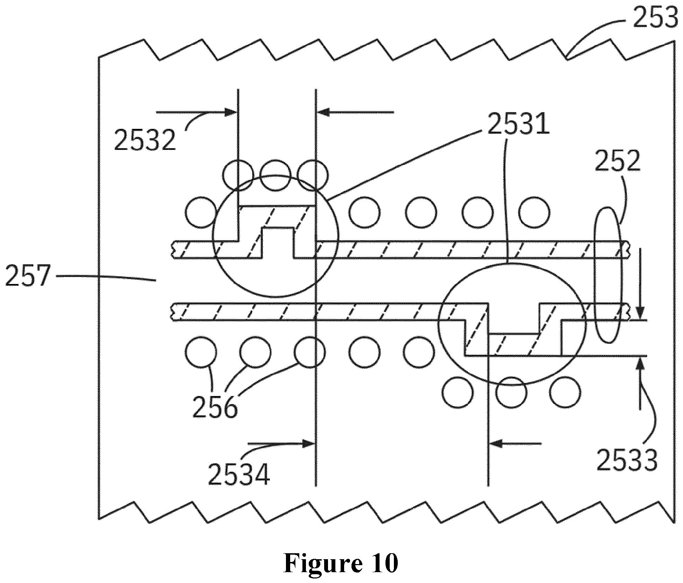

Fig. 7 shows details of said antenna string 250, where different substrate printed structures and vias are arranged in innovative way on said high frequency two-side metalized substrate 251. The right side of the Fig. 7 shows microstrip line, which is used as part of said antenna feeding structure 201, being connected to one of the ports of said mm-wave integrated radar circuit 300. Advantageously microstrip line structure has 50 Ohms. Knowing thickness of said two side metalized high frequency substrate 251, a width of said microstrip line can be calculated. Said microstrip line structure, from right to the left has transition to a coplanar waveguide structure, having the same characteristic impedance, like said microstrip line structure. A with of the non-metalized parts of said coplanar waveguide structure on upper and lower side is the same and it is selected to provide said characterizing impedance, by keeping the same width of microstrip line. Close to the edge of the upper part metallization of the said coplanar wave guide structure 252, vias are introduced, connecting lower and upper part of the said dielectric substrate 251, providing ground potential level on upper part of said dielectric substrate 251 and therefore there is an existence of electric fields, between not metalized gaps and main strip in the middle of said coplanar wave guide structure 252. Using as main building part, said coplanar wave guide structure 252 is used to form two types of matching entities: coplanar waveguide taper 254 and coplanar waveguide frequency selective matching entity 253. Said coplanar waveguide taper 254 entity is one of essential building blocks of said antenna string 250, and it is shown in Fig 8. Coming from the right to the left of Fig. 7 said coplanar waveguide taper 254 is widening a middle strip injecting currents in said antenna string 250. Said widening of a said strip, by keeping non-metalized gap unchanged, enables continues changing of coplanar waveguide 252 characteristic impedance, to be smaller enabling also spreading of currents along the upper metallization part of said high frequency substrate 251. Fig. 9 shows linear coplanar waveguide taper 254 realization option, where increase of the main strip coplanar waveguide width is linearly increased. Generally, a width increase is executed in polynomial way, where the order of polynomial is larger than zero. Exponential changes, and second order changes are recommended to reduce a size of said coplanar waveguide taper 254 lengths, with a good trade-off between overall reflections against a minimal taper length. Between said coplanar waveguide taper and said transition from said coplanar waveguide to said microstrip line, coplanar waveguide frequency selective matching structure 253 is introduced, shown in Fig. 10. Said coplanar waveguide frequency selective matching structure 253 has at least one matching element, wherein said matching element is introducing at least one changing of the width of said metalized middle part of the said coplanar waveguide transmission line, with a specific length, by keeping the slot distance to the zero ground, related to the upper of substrate 251, unchanged. This widening of the transmission line introduces, in a transmission line theory, a model containing capacity, inductivity, and resistance cell, with specific frequency dependent impedance, being introduced in said transmission line. Further along a coplanar waveguide structure, before said coplanar waveguide taper 254, additional said matching elements can be introduced, with different or same coplanar waveguide 252 main strip width changes. Frequency selective coplanar waveguide matching structure 253 is introduced to provide better reactive matching of said radiation elements 255 chains from said microstrip feeding over transition to said coplanar waveguide 252, over coplanar waveguide taper 254. Advantageously, optimized matching solution shows in the frequency range of operation, an input reflection loss of said antenna string 250 being better than -10dB. Said antenna string 250 has at least one radiation element 255.

As observed in Fig.8a said radiation element 255 has at least two coupled planar waveguide slots 2555 and 2553, each of them having rectangular shape, with the same one longer edge 2551 and the same one shorter edge 2554, wherein said two coupled planar waveguide slots are not metalized parts of an upper part of said two-side metalized dielectric substrate structure 251. Symmetrically, at the same distance from the most distant said long edge 2552 of said first planar wave guide slot 2553 two in-lined sets of metalized vias 256 are positioned. Said sets of metalized vias 256 are connecting said upper part and lower part of said two-side metalized dielectric substrate structure 251, where a distance between each set of said in-lined metalized vias, is building a surface integrated waveguide, allowing propagation of the electromagnetic waves, covering operation frequency of a said mm-wave apparatus, within the metalized dielectric substrate structure 251. Said distance is chosen to enable main transmission mode in said surface integrated waveguide, considering dielectric constant of said two side metalized high frequency substrate 251. Each said vias 256 are advantageously equally distant at a distance 2558, which is sufficiently small to present to the short cut for electromagnetic propagation of the ways within said surface integrated waveguide, but sufficiently large to minimize the production cost. Said two coupled planar waveguide slots 2553 and 2555 are arranged parallel one to another with their longer edge, at a distance X 2557, wherein said distance X 2557 is smaller than 200 micrometers and larger than 10 micrometers. A total distance Y, from most distant smaller edge of first said planar waveguide slot 2555 to a most distant smaller edge of a said second planar waveguide slot 2553, projected on a line being parallel to both said parallel longer edges 2552 and 2551, is larger than 1.1 times of said longer edge and smaller than 1.9 times of said longer edge. Said antenna radiation element 255 is fed by coplanar waveguide transmission line, injecting currents in said upper part of said metalized dielectric substrate structure 251. Propagation within said integrated waveguide structure and injected currents on upper substrate 251 metallization part are exciting a next radiation element 255, being part of said antenna string 250. A said distance 2557 between coplanar waveguide slots 2553 and 2555 is chosen carefully to be small enough to enable the propagation part content close to - 90 degree and + 90 degree edges of field of view, and large enough not to dramatically reduce radiation content in 0 degree field of view. An asymmetrical displacement of coplanar waveguide slots 2553 and 2555 are also generating radiation with both horizontal and vertical polarization, in contrast to classic coplanar slots or microstrip patch antennas, generating radiation in one polarization, seeing to the orientation of the microstrip feeding line of a said antenna string 250.

In Fig.8b lateral view of said two-side metalized high frequency substrate 251. Metallization parts 260 can be observed, having a metallization thickness 266, being advantageously less than 50 micrometers. Said two-side metalized high frequency substrate 251 has a dielectric thickness 256, advantageously being less than 0.5mm, where via 256 is connected upper and lower part of said two-side metalized high frequency substrate 251. Dielectric material 259 is a part of said two-side metalized high frequency substrate 251, having dielectric permittivity less than 10, advantageously less than 5. A width 263 of one of said coplanar waveguide slot 2555 or 2553 is presented, being related to specific width value 2556 and 2554.

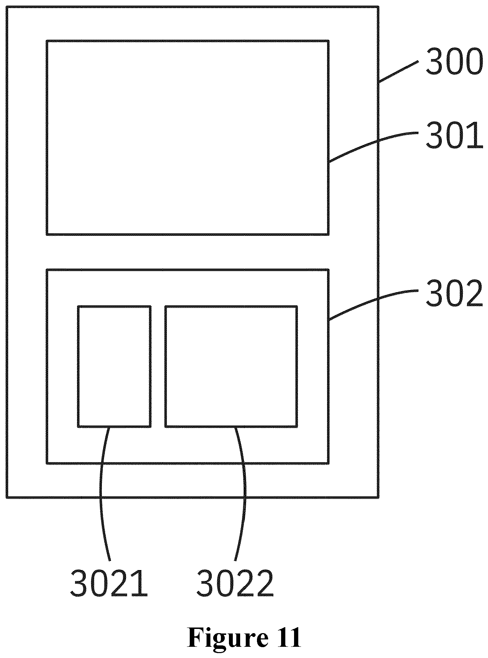

Fig. 11 shows said mmWave integrated radar circuit 300 end sub-system building blocks, where mm-wave front end sub-systems are a building part of said proposed apparatus 100. Said mmWave integrated radar circuit 300 has mmWave RF portion 301, and digital processing porting 302. Said digital processing porting 302 has HW accelerators entity 3021 and SW processing entity 3022. HW accelerators entity 3021 comprises digital hardwired accelerator to provide fast, real time processing function related to radar sensing. Advantageously fast Fourier transformation is executed, as well as specific data handling. SW related processing can be realized in reduced minimalistic manner in said SW processing entity 3022, like to calculate radar point cloud data, where each detected point has an information about distance, speed and angle toward apparatus, where the rest of processing, related to a specific radar sensing application, is executed on outside to said apparatus 100 vehicle processing unit. SW processing entity 3022 is advantageously calculating a list of detected objects having distance, speed and angle related to said apparatus 100. SW processing entity 3022 is advantageously calculating more than one application specific events: like parking support, gesture sensing, power door maximum opening to avoid damages, detection of low height object, alert of approaching collision objects, classification of objects, tracking of objects, where said object are detected by said apparatus 100 in 180 degree field of view.

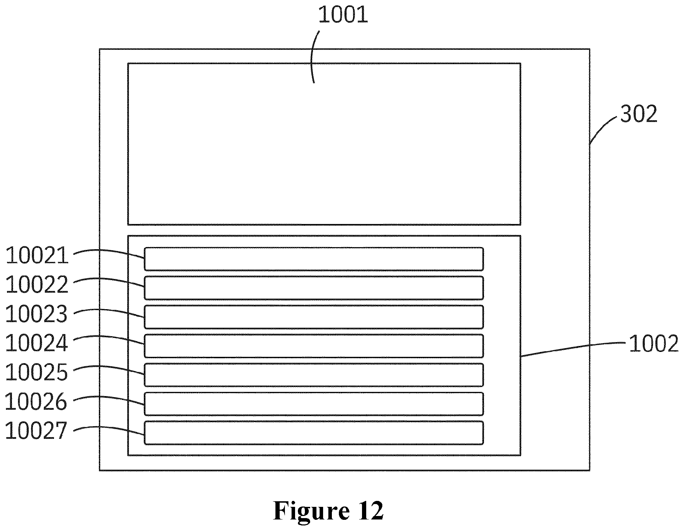

Fig. 12 shows a signal processing sub-system 302 logical building blocks, having obligatory building block to calculate radar point cloud data 1001, meaning set of points having distances, angles, and speeds related to the said apparatus 100, where more than one of said points are part of the same objects, under said apparatus 100 sensing. In application related building block 1002, results from radar point cloud data 1001 to address specific radar sensing application of said apparatus 100, are conducted. Advantageously, application related building block 1002 is supporting at least one of following applications: netlist of the detected objects each with objects distance, speed and angle related to said apparatus 100, 10021; tracking information related to said detected objects 10022; kick detection event 10023; hand detection event 10024; maximum opening angle for vehicle door or tailgate not to cause said vehicle door or said tailgate damage, 10025; classification of objects 10026; collision avoidance warning 10027. Said classification of objects 10026 includes differentiation of objects: of at least one of differentiation classes: passenger vehicle category, human category, two-wheeler category, small commercial vehicle category, medium commercial vehicle category, large commercial vehicle category, vehicle with trailer category, pat category, rod category, sidewalk category, curb category, and hole category. A Classification of said categories is done by applying artificial intelligence methodology, with arbitrary state of the art algorithm set ups, and combination of algorithms. A pre-requisite for applied said applying artificial intelligence methodology is that the related annotations regarding specific category distinctions is executed, and specific said applying artificial intelligence is applied on trained network, being fed by related annotation results. More classification categories impose more complex network, requesting larger processing efforts, which may impose larger digital processing efforts and therefore, more complex digital processing HW, which reflects to higher cost of said apparatus 100. A need to cover larger thermal dissipation power is also born. Advantageously, classification is limited to basic categories allowing to driver or 2-wheeler rider basic important information, bringing more comfort, which may be than ideally fully realized with a processing power within said mmWave integrated circuit 300. Advantageously, classification is limited to classification categories; passenger vehicle, truck and motorcycles, providing to the user: driver or rider, vehicle awareness in a rear area or lateral area, to the vehicle moving trajectory.

This effect brings also additional system advantage in radar sensor area: proposed apparatus 100 courses significantly less interference to the common radar sensor radiation with only one polarization, because common state of the art radar sensors are receiving parasitic non-wanted radiation, with main polarization part, and they are receiving parasitic radiation portion from orthogonal parasitic radiation part, significantly attenuated, typically more than 10 dB attenuated. That means proposed apparatus 100, being typically deployed as short-range radar and medium range radar, is disturbing less, injecting inherently less interference to other state of the art radar sensor systems. On the other side, proposed apparatus 100 is sending and receiving electromagnetic radiation in different polarization arrangements, compared to state of art sensors. This feature of proposed apparatus 100 of injecting inherently less interference, can be independently enhanced with arbitrary modulation techniques approaches of radar signal, being realized in said mmWave integrated radar circuit entity 300.

Advantageously said antenna strings 250 is integrated on a package of said mmWave integrated radar circuit entity 300. This approach may allow to have very small size of said apparatus 100, as well as reduced electromagnetic signal strength losses in the transmission lines, because they are shorter. This arrangement is particularly useful when the number of the antenna strings 250, meaning the number of receiving and transmitting ports of a said mmWave integrated radar circuit entity 300 is small, and when the number of utilized said radiation elements 255 is small, advantageously only one. This approach allows an integration of said mmWave integrated radar circuit entity 300 with integrated antenna strings 250 directly to the hard low-cost substrate, so that the total production cost and over size of proposed apparatus 100 is decreased.

Said apparatus 100 is advantageously placed with the angle larger than zero degree to horizontal plane parallel to the ground, toward the ground plane being mounted on the vehicle. This proposed arrangement allows better detection of low high objects, particularly for parking short range applications.

Said apparatus 100 is advantageously placed on more than one side of said vehicle, enabling 360 coverage if placed on opposite sides of said vehicle, or 360 degree coverage with redundancy on the corners, with monitoring overlapping, if placed on four sides of said vehicle.

Said apparatus 100 is enabling detection of distance to targets, their speed, angular position relative to said apparatus 100, by using processing in mmWave integrated radar circuit entity 300, particularly in its digital processing part. Said mmWave integrated radar circuit entity 300 has digital processing part, which is integrated on one single integrated circuit. mmWave integrated radar circuit entity 300 can be attached to other digital processing entity which is not on the same integrated circuitry. Particularly, proposed innovative approach can be released when a hardware digital processing part is on printed circuit board on separate integrated circuit than radio part of mmWave integrated radar circuit entity 300. Particularly said Apparatus 100 is sending digital data, to a remote to the said apparatus, vehicle processing unit, which enables detection of distance to targets, their speed, angular position relative to said apparatus. Said apparatus 100 can provide classification of targets by both on edge processing inside said apparatus 100 and on remote to said apparatus 100 vehicle processing unit. Said apparatus 100 can provide tracking of targets by both on edge processing inside said apparatus 100 and on remote to said apparatus 100 vehicle processing unit.

Said apparatus 100, advantageously have additional functionality of the camera being integrated in the same housing with radar sensor, to minimize the sensor cost by introducing state of art camera sensor, widely used for parking support and video monitoring. Radar sensing provides information about distance and speed in contrast to camera sensor, where perception decision and awareness what Is happening is decided by driver itself, using driver brain processing. So, both combined could give information offering more security and safety. By integrating state of the art camera system with a proposed 180 degree radar sensing functionality, a new feature and a new quality for the driver is offered, and overall system cost is decreased. One housing is used for two sensors, and less sensor system integration cost in vehicle production, by smaller number of assembly steps in sensor integration in a vehicle, compared to integrated two separate sensors, is achieved. In that case said apparatus 100 with integrated camera can keep separate cabling state of the art interface for camera by keeping radar sensor interface interfaces comprising separate realization of combined realization of CAN interface, Ethernet interface, wireless interface. Advantageously only one physical interface, over one connector and one cabling is approaching vehicle infrastructure, meaning that one single cable is transmitting digital data, by using separate data lines, or by suing high speed data transmitting protocols by arbitrary protocol realization options. In the case of two-wheeler application on other side, advantageously both radar sensing and video sensing information can be sent by said wireless means to the to the vehicle infrastructure to minimize the sensing system deploying cost.

Said apparatus 100 is mounted in advantageously utilized to after-market, where said apparatus 100 is integrated to the already produced vehicles. In that case, advantageously only said wireless communication means are used to the connection to a vehicle structure, without other wired digital interfaces. This saves integration costs significantly.

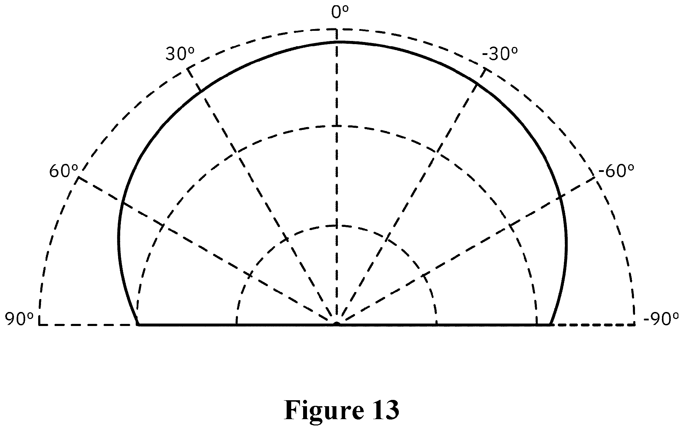

Fig. 13 shows approximative radiation diagram related to said antenna string 250, having proposed said radiation elements 255. It can be observed that there is 180 degree radiation achieved. Antenna in +90 degrees and -90 degrees are smaller than radiation in 0 degrees, but sufficiently large to cover target radar sensing applications. As a comparison radiation in state of the art planar realized radar sensor at +90 degrees and -90 degrees is zero degree. So, this result is a fundamentally important achievement, with an fundamentally important practical application impact, underlying importance of said apparatus 100.

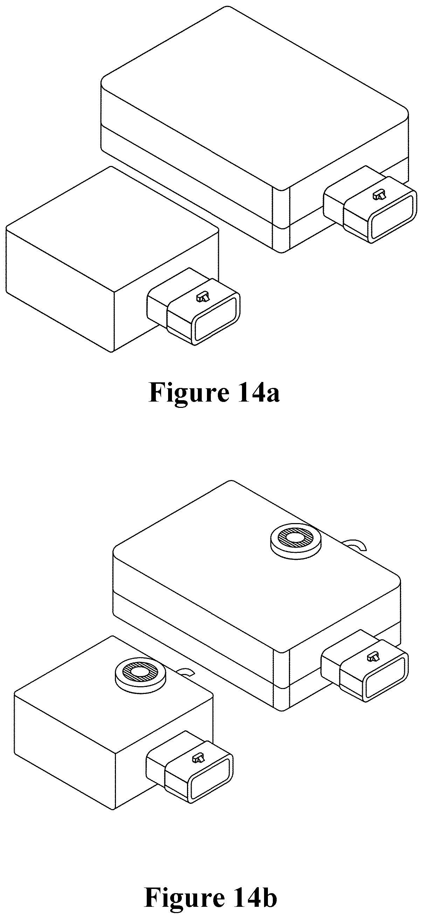

Fig. 14 shows one of the possible realization options for a complete mechanical outlook of the proposed apparatus 100. The possible size of 180° FoV radar sensor depending on sets of applications can be from 15mm X 15mm, with a thickness of below 20mm for the simplest application set, like pure replacement of the ultrasound systems, with an optional kick sensor. The size of the system is dependent on the number of used antenna strings 250, as well as number of radiation elements used in particular strings. The possible size of 180° FoV radar sensor depending on sets of more complex applications with high detection, and or awareness can be in range of 70mm to 50mm, with a thickness of about 20mm. One of possible realization options for a complete mechanical outlook of said proposed apparatus 100 with an integrated camera. The camera, in this implementation option, is positioned at the top middle part of the apparatus' 100 housing, where the related integration place can be found. The camera's information output is provided for assessment over separate cable or over the same connector as the information coming from the radar, or over a wireless interface integrated in said apparatus 100. Video information can be then combined with radar sensor alerts, or triggered by the radar sensor alerts, transmitted to the vehicle cluster and/or to the infotainment system display, and/or to the display integrated into the rear-view mirrors, and/or or in the display integrated into the rider's helmet for two-wheeler vehicles. For the wired transmission, the video signal can be packed with compression over the existing CAN bus, to maintain the lowest possible system cost for a sufficiently good level of information, leading to more comfort.

Further aspects and examples are found in the following numbered clauses:

### Clauses

1. Apparatus working as mmWave radar sensor module comprising:
   a mmWave integrated radar circuit entity having at least one receiving input and one transmitting output;
   an antenna structure having at least one antenna string receiving mmWave signals, and at least one antenna string transmitting mmWave signals, all the antenna strings being connected by mmWave electromagnetic transmission guides to the integrated mmWave integrated radar circuit entity,
   wherein said electromagnetic transmission guides of particular said antenna strings are realized on two-side metalized dielectric substrate,
   wherein said antenna strings have at least one radiation element, wherein said radiation element has at least two coupled planar waveguide slots, each of them having rectangular shape, with the same one longer edge and the same one shorter edge, being parallel to each other, and displaced,
   wherein said two coupled planar waveguide slots are not metalized parts of an upper part of said two-side metalized dielectric substrate structure, where symmetrically at the same distance from the most distant said long edges of said first and said second planar wave guide slot, two in-lined sets of metalized vias, are positioned, connecting said upper part and lower part of said two-side metalized dielectric substrate structure, where a distance between each set of said in-lined metalized vias, are building a surface integrated waveguide, allowing propagation of the electromagnetic waves inside said two-side metalized dielectric substrate, covering operation frequency of a said mm-wave apparatus,
      wherein said two coupled planar waveguide slots are arranged parallel one to another with their longer edge, at a distance X, wherein said distance X is smaller than 200 micrometers and larger than 10 micrometers,
      wherein a total distance Y, from most distant smaller edge of first said planar waveguide slot to the most distant smaller edge of a said second planar waveguide slot, projected on the line parallel to the both said parallel longer edges, is larger than 1.1 times of said longer range and smaller than 1.9 times of said longer range,
   wherein said surface integrated waveguide is fed by coplanar waveguide transmission line, injecting currents in said upper part of said two-side metalized dielectric substrate structure.
2. Apparatus according to clause 1,
   wherein said coplanar waveguide transmission line, injecting currents in the said upper part of said two-side metalized dielectric substrate structure, is tapered, meaning that at the side where coplanar waveguide structure is approaching said radiation element, metalized middle part of the said coplanar waveguide transmission line, transporting current, is continuously increasing its width, along with approaching said radiation element, where the increase of the width between said coplanar waveguide slots, is causing transmission line characteristic impedance change from larger toward smaller one, approaching said radiation element;
   wherein the increase of the said width, along to the distance, is symmetrical along the said metalized middle part, and can be described by the polynomial function, of the order N, where N is taking number larger than zero.
3. Apparatus according to clause 2,
   wherein before said tapered coplanar waveguide structure and transition from the coplanar waveguide structure and microstrip feeding line, connecting said antenna strings to the one mm-wave port of the said mmWave integrated radar circuit entity, frequency selective, coplanar waveguide matching structure is introduced;
   wherein said frequency selective coplanar waveguide matching structure is having at least one matching element;
   wherein said matching element is introducing changing of the width of said metalized middle part of the said coplanar waveguide transmission line, with a specific length, by keeping the slot distance to the zero ground the same.
4. Apparatus according to any of the preceding clauses,
   where said antenna strings are integrated on said mmWave integrated radar circuit entity.
5. Apparatus according to any one of the preceding clauses, wherein said apparatus is placed with the minimum inclination angle of zero degree from the horizontal plane parallel to the ground, toward the ground plane, mounted on the vehicle.
6. Apparatus according to any one of the preceding clauses, wherein a vehicle, has more than one wheel.
7. Apparatus according to any one of the preceding clauses, where the said vehicle, has more than one said apparatusses, mounted on more than one side of a vehicle.
8. Apparatus according to any one of the preceding clauses, where said apparatus can provide signal processing on module enabling detection of distance to targets, their speed and angular position relative to said apparatus.
9. Apparatus according to 1-8 of the preceding clauses, where the said apparatus is sending digital data, to a remote to the said apparatus, vehicle processing unit, which enables detection of distance to targets, their speed, angular position relative to said apparatus.
10. Apparatus according to any one of the preceding clauses, where the said apparatus can provide classification of targets.
11. Apparatus according to any one of the preceding clauses where the said apparatus can provide tracking of targets.
12. Apparatus according to any one of the preceding clauses, where in the same body of the said apparatus, the camera is integrated.
13. Apparatus according to clause 11, where only one physical connection for both said apparatus and camera is approaching a vehicle infrastructure.
14. Apparatus according to any one of the preceding clauses, where the said apparatus has integrated short range wireless communication means integrated circuit, enabling sensor information transmission wirelessly to a part of a vehicle body.
15. Apparatus according to any one of the preceding clauses, where the sensor information is additionally transmitted to a two-wheeler rider's helmet.
16. Apparatus according to any one of the preceding clauses, wherein the sensor information is additionally transmitted to a two-wheeler rider's airbag.
17. Apparatus according to any one of the preceding clauses, wherein the sensor information is transmitted to o two-wheelers' back looking mirrors.
18. Apparatus according to any one of the preceding clauses, wherein apparatus is mounted in after-market manner to the vehicle having only wireless communication means to the vehicle structure, without other wired digital interfaces.
19. Apparatus according to any one of the preceding clauses,
   wherein, inside said apparatus the signal processing entities is performing at least one application, among summarized applications: provision of a net list of detected objects, each with object distance, speed and angle related to said apparatus 100, tracking information related to the said detected objects; kick gesture detection event; hand gesture detection event; maximum opening angle for vehicle door or not to cause said vehicle door or said tailgate damage; classification of objects; and collision avoidance warning.
19. Apparatus according to any one of the preceding clauses,
   wherein, inside said apparatus the signal processing entities is performing at least one classification application, among summarized classification classes: passenger vehicle category; human category, two-wheeler vehicle category; small commercial vehicle category; medium commercial vehicle category; large commercial vehicle category;
   vehicle with a trailer category; pat category; rod category; sidewalk category; curb category; wall category and hole category, where category means class of objects having specific art of commonalities in their perception.

## Claims

1. Apparatus working as mmWave radar sensor module comprising:
a mmWave integrated radar circuit entity having at least one receiving input and one transmitting output;
an antenna structure having at least one antenna string receiving mmWave signals, and at least one antenna string transmitting mmWave signals, all the antenna strings being connected by mmWave electromagnetic transmission guides to the integrated mmWave integrated radar circuit entity,
wherein said electromagnetic transmission guides of particular said antenna strings are realized on two-side metalized dielectric substrate,
wherein said antenna strings have at least one radiation element, wherein said radiation element has at least two coupled planar waveguide slots, each of them having rectangular shape, with the same one longer edge and the same one shorter edge, being parallel to each other, and displaced,
wherein said two coupled planar waveguide slots are not metalized parts of an upper part of said two-side metalized dielectric substrate structure, where symmetrically at the same distance from the most distant said long edges of said first and said second planar wave guide slot, two in-lined sets of metalized vias, are positioned, connecting said upper part and lower part of said two-side metalized dielectric substrate structure, where a distance between each set of said in-lined metalized vias, are building a surface integrated waveguide, allowing propagation of the electromagnetic waves inside said two-side metalized dielectric substrate, covering operation frequency of a said mm-wave apparatus,
wherein said two coupled planar waveguide slots are arranged parallel one to another with their longer edge, at a distance X, wherein said distance X is smaller than 200 micrometers and larger than 10 micrometers,
wherein a total distance Y, from most distant smaller edge of first said planar waveguide slot to the most distant smaller edge of a said second planar waveguide slot, projected on the line parallel to the both said parallel longer edges, is larger than 1.1 times of said longer range and smaller than 1.9 times of said longer range,
wherein said surface integrated waveguide is fed by coplanar waveguide transmission line, injecting currents in said upper part of said two-side metalized dielectric substrate structure.

2. Apparatus according to claim 1,
wherein said coplanar waveguide transmission line, injecting currents in the said upper part of said two-side metalized dielectric substrate structure, is tapered, meaning that at the side where coplanar waveguide structure is approaching said radiation element, metalized middle part of the said coplanar waveguide transmission line, transporting current, is continuously increasing its width, along with approaching said radiation element, where the increase of the width between said coplanar waveguide slots, is causing transmission line characteristic impedance change from larger toward smaller one, approaching said radiation element;
wherein the increase of the said width, along to the distance, is symmetrical along the said metalized middle part, and can be described by the polynomial function, of the order N, where N is taking number larger than zero.

3. Apparatus according to claim 2,
wherein before said tapered coplanar waveguide structure and transition from the coplanar waveguide structure and microstrip feeding line, connecting said antenna strings to the one mm-wave port of the said mmWave integrated radar circuit entity, frequency selective, coplanar waveguide matching structure is introduced;
wherein said frequency selective coplanar waveguide matching structure is having at least one matching element;
wherein said matching element is introducing changing of the width of said metalized middle part of the said coplanar waveguide transmission line, with a specific length, by keeping the slot distance to the zero ground the same.

4. Apparatus according to any one of the preceding claims,
where said antenna strings are integrated on said mmWave integrated radar circuit entity.

5. Apparatus according to any one of the preceding claims, wherein said apparatus is placed with the minimum inclination angle of zero degree from the horizontal plane parallel to the ground, toward the ground plane, mounted on the vehicle.

6. Apparatus according to any one of the preceding claims, wherein a vehicle, has more than one wheel.

7. Apparatus according to any one of the preceding claims, where the said vehicle, has more than one said apparatuses, mounted on more than one side of a vehicle.

8. Apparatus according to any one of the preceding claims, where said apparatus can provide signal processing on module enabling detection of distance to targets, their speed and angular position relative to said apparatus.

9. Apparatus according to 1-7 of the preceding claims, where the said apparatus is sending digital data, to a remote to the said apparatus, vehicle processing unit, which enables detection of distance to targets, their speed, angular position relative to said apparatus.
9. Apparatus according to any one of the preceding claims, where the said apparatus can provide classification of targets.

10. Apparatus according to any one of the preceding claims, where the said apparatus can provide tracking of targets.

11. Apparatus according to any one of the preceding claims, where in the same body of the said apparatus, the camera is integrated.

12. Apparatus according to claim 11, where only one physical connection for both said apparatus and camera is approaching a vehicle infrastructure.

13. Apparatus according to any one of the preceding claims, where the said apparatus has integrated short range wireless communication means integrated circuit, enabling sensor information transmission wirelessly to a part of a vehicle body.

14. Apparatus according to any one of the preceding claims, where the sensor information is additionally transmitted to a two-wheeler rider's helmet.

15. Apparatus according to any one of the preceding claims, wherein the sensor information is additionally transmitted to a two-wheeler rider's airbag.

16. Apparatus according to any one of the preceding claims, wherein the sensor information is transmitted to o two-wheelers' back looking mirrors.

17. Apparatus according to any one of the preceding claims, wherein apparatus is mounted in after-market manner to the vehicle having only wireless communication means to the vehicle structure, without other wired digital interfaces.

18. Apparatus according to any one of the preceding claims,
wherein, inside said apparatus the signal processing entities is performing at least one application, among summarized applications: provision of a net list of detected objects, each with object distance, speed and angle related to said apparatus 100, tracking information related to the said detected objects; kick gesture detection event; hand gesture detection event; maximum opening angle for vehicle door or not to cause said vehicle door or said tailgate damage; classification of objects; and collision avoidance warning.

19. Apparatus according to any one of the preceding claims,
wherein, inside said apparatus the signal processing entities is performing at least one classification application, among summarized classification classes: passenger vehicle category; human category, two-wheeler vehicle category; small commercial vehicle category; medium commercial vehicle category; large commercial vehicle category; vehicle with a trailer category; pat category; rod category; sidewalk category; curb category; wall category and hole category, where category means class of objects having specific art of commonalities in their perception.
